# EUROPÄISCHE PATENTSCHRIFT

(11) **EP 0 611 736 B1**
(45) Veröffentlichungstag und Bekanntmachung des Hinweises auf die Patenterteilung: **09.10.1996**
(21) Anmeldenummer: 93119746.1
(22) Anmeldetag: 08.12.1993
(51) Int. Cl.: C04B 35/00

(54) **Verfahren zur Herstellung von feinkeramischem Pressgranulat mittels Wirbelschichtgranulationstrocknung**
Process for the production of fine, ceramic pressing granulate by fluidised-bed drying
Procédé pour la préparation de granules céramiques fines, par séclage en lit fluidisé

(30) Priorität: 17.02.1993 DE 4304809
(43) Veröffentlichungstag der Anmeldung: 24.08.1994
(73) Patentinhaber: GLATT INGENIEURTECHNIK GmbH, D-99423 Weimar (DE)
(72) Erfinder: Rümpler, Karlheinz, Dr. Dipl.-Ing., D-99425 Weimar (DE); Böber, Reinhard, Dipl.-Ing., D-99425 Weimar (DE); Willert, Olaf, Dipl.-Ing., D-99427 Weimar (DE); Nowak, Reinhard, Dipl.-Ing., D-79589 Binzen (DE); Clauss, Ullrich, Dipl.-Ing., D-01662 Meissen (DE); Angermann, Wilfried, Dipl.-Ing., D-01640 Coswig (DE)
(74) Vertreter: Schmitt, Hans, Dipl.-Ing.

(56) Entgegenhaltungen:
- EP-A- 0 249 057
- DE-A- 3 617 687
- FR-A- 2 166 067
- DATABASE WPI Week 9410, Derwent Publications Ltd., London, GB; AN 94-077346 & JP-A-6 023 506 (AHRESTY KK)

## Beschreibung

Die Erfindung betrifft ein Verfahren zur Herstellung von feinkeramischem Preßgranulat mittels der Wirbelschichtgranulationstrocknung für eine nachfolgende Preßtechnologie.

In der feinkeramischen Industrie wird seit den 70er Jahren bis gegenwärtig die Sprühgranulation als weitverbreitetes Verfahrenssprinzip zur Herstellung von Preßgranulat eingesetzt. Die dafür nutzbaren Massesuspensionen enthalten zur förderlichen Unterstützung des Preßvorganges und zur Erzielung erforderlicher Grünlingsfestigkeiten konkrete Restfeuchtegehalte und bestimmte organische Preßhilfsmittel. Das Verfahren umfaßt das Trocknen und Granulieren als Komplexschritt (Ind. Ceram. (1970) S. 207 - 211). Das aus der feinkeramischen Suspension durch Sprühgranulation hervorgegangene Preßgranulat zeichnet sich durch rundes Korn, gute Rieselfähigkeit und hohe Packungsdichte beim Schüttvorgang aus.

Als Nachteil werden die verfahrenstechnisch bedingte Bildung eines Hohlraumes in den Zentren der Granalien und deren inhomogene Massebelegung (Dichte) in Verbindung mit einem nichthomogenen Feuchteprofil vom Granalienzentrum zum Rand erkannt. Das eingeschlossene Luftvolumen einer solchen Granulatschüttung ist zu hoch.

Im Bereich der technischen Keramik wird das Wirbelschichtgranulationstrocknungsverfahren mit eigenen typischen stofflichen und verfahrenstechnischen Parametern bereits angewandt.

Auch hier wird sowohl das Trocknen wie auch das Granulieren In einem Arbeitsgang absolviert. Die hier ebenfalls zumeist als Suspension vorliegende Ausgangsmasse beinhaltet zur Schaffung der für eine Verdüsung notwendigen Rheologie, entsprechend ihrem Habitus, Verflüssiger, Binde- und Preßhilfsmittel. Diese unterscheiden sich je nach Masseeigenschaft in der Art und Zugabemenge. Letztere liegt im Vergleich mit feinkeramischen Massen wesentlich höher, weil die feinheramischen Versätze eigene Bindekräfte entwickeln, quellfähig und in Wasser löslich sind, was zusätzlich Einfluß auf die Suspensionsrheologie nimmt. Die vorliegende Suspension wird als feiner Nebelschleier auf das Wirbelbett des Wirbelschichttrockners gesprüht (DD 137 835)

Der Nachteil des im Patent DD 137 835 beschriebenen Verfahrens besteht darin, daß es mit der genannten stofflichen und verfahrenstechnischen Konstellation nicht möglich ist, feinkeramische Preßgranulate mit ihren für deren Verarbeitungsprozeß typischen Eigenschaften herzustellen. Die Art und Zusammensetzung des Schlickers, die Art und Zusammensetzung der Zusatz- und Hilfskomponenten und die erforderlichen verfahrenstechnischen Parameter des Wirbelschichtprozesses sind typisch für den Bereich der technischen Keramik, für die Herstellung von technischem Preßkeramikgranulat. Rohstoffe, Hilfs- und Zusatzstoffe unterscheiden sich in Art und Zusammensetzung, die technologischen Parameter des Wirbelschichtprozesses haben andere Größenordnungen, die erhaltenen Granulate besitzen andere Eigenschaften, wenn feinkeramisches Preßgranulat hergestellt werden soll.

Aus der DD 101 747 ist ein Mehrzonenwirbelschichtverfahren zur Herstellung von Keramikgranulat für die Fliesenproduktion bekannt. Solche Anlagen bestehen aus mehreren Wirbelbettzonen, auf die Trocknungsgase mit unterschiedlichen Wärmeinhalten einwirken. Die einzelnen Zonen arbeiten analog den oben beschriebenen Wirbelschichttrockern.

EP-A-0 249 057 bezieht sich auf ein Verfahren zum Herstellen einer feinkeramischer Masse, wobei die Einsatzstoffe trocken oder feucht aufgemahlen und von oben im freien Fall in und durch einen vertikal angeordneten Behälter geführt werden und werden dabei mit der oder einem Teil Flüssigkeit durch Eindüsen unter Einwirkung von Turbulenz in Kontakt gebracht und zu Granulaten agglomeriert.

Den Vorteil, der Herstellung von Granulaten mit bestimmter Restfeuchte aus schwerem löslichem Ausgansmaterial büßt man durch große kornbandbreiten - Überkornanteil muß zerkleinert und zurückgeführt werden, hoher Staubanteil senkt die Verpreßbarkeit der Granulate drastisch - somit zeitlich und energetisch wieder ein. Es besteht hier auch die Gefahr örtlicher Überhitzungen, die schädlichen Einfluß auf die Binde- und Preßhilfsmittel nehmen.

Die Aufgabe der Erfindung besteht darin, das Verfahren zur Herstellung von feinkeramischem Granulat mittels Wirbelschichtgranulationstrockung so weiterzuentwickeln, daß bei koszengünstiger Erzeugung das entstehende Granulat ein für den feinkeramischen Einsatzzweck erforderliches Kornband und darauf abgestimmte Materialfeuchte hat, rund und kompakt ist und den Anforderungen einer nachgeschalteten Preßformgebung entspricht.

Erfindungsgemäß wird das dadurch erreicht, daß der keramische Schlicker - wie im Patentanspruch beschrieben - mit Zusatzkomponenten für die Verflüssigung, den Feststoffaufbau und den Preßvorgang versehen wird und diese Suspension dem Wirbelschichtprozeß unter Einhaltung bestimmter verfabreinstechnischer Parameter aufgegeben wird.

Der keramische Schlicker wird zur Erzeugung der für das Verdüsen in der Wirbelschicht notwendigen Suspension mit einschlägigen Verflüssigern, wie z. B. Formsil und/oder Ätznatron, versetzt und somit verflüssigt.

Als Bindemittel - zum Aufbau eines kugelförmigen dichten Granulats mit hoher Schüttdichte und guter Rieselfähigkeit - und als Preßhilfsmittel - zur Erzielung einer hinreichend hohen Grünlingsfestigkeit des zu pressenden Artikels - werden dem Schlikker Polyvinylalkohol (PVA) , Polyvinylacetat (PVAC) und Polysaccharid/Acrylsäure (PS/AC) in Mengen von 0,4 bis 1,5 Masse-%, bezogen auf den Trockenstoffanteil, zugesetzt. Das Verhältnis PVA : PVAC : PS/AC liegt, bezogen auf den Trockenstoffanteil, bei (40 ± 20) : (50 ± 20) : (10 ± 10) %. Die rheologischen Daten des Schlickers sind mit der Feuchte von (38 ± 3) %, der Dichte von (1600 ± 50) g/l und der Auslaufzeit des Auslaufviskosimeters bei 50 ml Inhalt und einem Düsendurchmesser 4mm von (10 ± 3) s festgelegt.

Der so vorbereitete feinkeramische Schlicker wird mit Zusatzstoffen entsprechend dem gewünschten Endprodukt versehen und in die Wirbelschicht in ein Bett aus arteigenem Material über ein Verdüsungssystem mit oder ohne Düsenluft eingedüst. Das Wirbelbett bildet sich über einem luftdurchlässigen Anströmboden aus, durch den von unten der Wärmeträger heiße Luft oder heißes Rauchgas einströmt und im Wirbelraum die notwendige kinetische Energie zur Erzeugung des Wirbelbettes liefert und die für den Trocknungsvorgang erforderliche fühlbare Wärme mit sich führt.

Die Zulufttemperatur des Wärmeträger für die Herstellung von feinkeramischem Preßgranulat beträgt 180 bis 250 °C. Die Ablufttemperatur liegt zwischen 40 und 100 °C. Bei diesen verfahrenstechnischen Parametern entsteht ein Keramikgranulat mit folgenden Eigenschaften, das auch für eine anschließende Preßtechnologie geeignet ist:

| | |
|---|---|
| Feuchte | 2 bis 5 % |
| Korngröße | 0,1 bis 0,8 mm |
| Kornform | rund, kompakt |
| Schüttdichte | 850 bis 950 g/l |

Die Vorteile des erfindungsgemäßen Verfahrens bestehen darin, daß es möglich ist, ein feinkeramisches Preßgranulat im Wirbelschichtgranulationstrocknungsverfahren herzustellen, das gegenüber dem Granulat nach der bekannten Sprühgranulation verbesserte Eigenschaften in den nachfolgenden technologischen Produktionsstufen, wie dem Preß- und Brennprozeß, besitzt. Dieses zeigt sich besonders darin, daß das Keramikgranulat einen kugelförmigen, dichten Aufbau mit hoher Schüttdichte, guter Rieselfähigkeit und hoher Grünlingsfestigkeit für den nachfolgenden Preßvorgang aufweist. Es gelingt, die bei der Sprühgranulation auftretenden deutlichen Unterschiede im Feuchtigkeitsgehalt der einzelnen Kornklassen hier geringer zu halten. Verbesserte Preßeigenschaften sind die Folge. Außerdem läßt das Keramikgranulat wenig innere Kornreibungsverluste zu und beeinflußt somit den Granaliendeformations- und -bruchverlauf während des nachfolgenden Preßvorganges günstig. Weitere Vorteile folgen aus der weicheren Oberflächenstruktur der Keramikgranulate. Bei gleicher Abriebfestigkeit ergeben sich nach dem Preßvorgang glattere Oberflächen und schärfere Formgebungskonturen.

Die Erfindung wird anhand eines Ausführungsbeispiels näher erläutert. Zur Erzeugung eines Porzellankeramikgranulates wird ein feinkeramischer Schlicker mit Formsil und/oder Ätznatron zur Verflüssigung versetzt. Dem verflüssigten Schlicker werden als Binde- und Preßhilfsmittel Polyvinylalkohol (PVA), Polyvinylacetat (PVAC) und Polysaccharid/Acrylsäure (PS/AC) in der Menge von 0,8 Masse-%, bezogen auf den Trockenstoffanteil des Schlickers, zugegeben. Das Verhältnis PVA : PVAC : PS/AC beträgt dabei 40 : 45 : 15 %.

Der so hergestellte feinkeramische Schlicker weist folgende Kenndaten auf,

| | |
|---|---|
| Feuchte | 36,5 % |
| Dichte | 1640 g/l |
| Auslaufzeit | 10 s |

und wird in der Wirbelschicht in ein Bett aus arteigenem Material über ein Verdüsungssystem eingedüst. Die Zulufttemperatur zur Wirbelschichtgranulation beträgt 220 °C und die Ablufttemperatur 50 °C.

In der Wirbelschicht entstand ein Granulat mit folgenden Eigenschaften:

| | |
|---|---|
| Korngröße | 0,1 - 0,5 mm bei 5 % Überkorn |
| Feuchte | 3,4 % |
| Kornform | rund, kompakt |
| Schüttdichte | 870 g/l |

Mit dem Granulat wurden auf einer isostatischen Presse Teller hergestellt, die sehr glatte Oberflächen und scharfe Konturen besitzen und sich durch sehr geringe Bruchquoten während der nachfolgenden technologischen Produktionsstufen auszeichneten.

Die Erfindung betrifft ein Verfahren zur Herstellung von feinkeramischem Preßgranulat mittels der Wirbelschichtgranulationstrocknung, wobei das entstehende Granulat einer nachgeschalteten Preßformgebung entspricht.

Erfindungsgemäß wird das dadurch erreicht, daß dem feinkeramischen Schlicker zur Verflüssigung einschlägige Verflüssiger und als Bindemittel und Preßhilfsmittel Polyvinylalkohol (PVA), Polyvinylacetat (PVAC) und Polysaccharid/Acrylsäure (PS/AC) in den Mengen von 0,4 bis 1,5 Masse-% bezogen auf den Trockenstoffanteil des Schlickers, im Verhältnis PVA : PVAC : PS/AC = (40 ± 20) : (50 ± 25) : (10 ± 10) % so zugesetzt werden, daß der Schlicker eine Feuchtigkeit von (38 ± 3) % und eine Dichte von (1600 ± 50) g/l besitzt und daß die Zulufttemperatur des Wärmeträgers zur Wirbelschichtgranulationstrocknung von feinkeramischem Preßgranulat 180 bis 250 °C und die Ablufttemperatur 40 bis 100 °C betragen.

## Patentansprüche

1. Verfahren zur Herstellung von feinkeramischem Preßgranulat mittels der Wirbelschichtgranulationstrocknung, wobei der Schlicker mit Verflüssigungs-, Bindehilfs- und Preßhilfsmitteln versetzt wird und heiße Luft oder Rauchgas als Wärmeträger und zur Aufrechterhaltung des Wirbelbettes dem Wirbelraum von unten zugeführt wird, gekennzeichnet dadurch, daß dem feinkeramischen Schlicker Verflüssiger und als Bindeund Preßhilfsmittel Polyvinylalkohol (PVA), Polyvinylacetat (PVAC) und Polysaccharid/Acrylsäure (PS/AC) in den Mengen von 0,4 bis 1,5 Masse-%, bezogen auf den Trockenstoffanteil des Schlickers, im Verhältnis PVA : PVAC : PS/AC = (40 ± 20) : (50 ± 25) : (10 ± 10) % so zugesetzt werden, daß der Schlikker eine Feuchtigkeit von (38 ± 3) % und eine Dichte von (1600 ± 50) g/l besitzt und daß die Zulufttemperatur des Wärmeträger zur Wirbelschichtgranulationstrocknung von feinkeramischem Preßgranulat 180 bis 250 °C und die Ablufttemperatur 40 bis 100 °C betragen.

## Claims

1. A process for the production of fine ceramic pressing granulate by fluidized-bed drying, wherein liquefacients, binding additives and pressing additives are added to the slip and hot air or smoke gas is supplied to the fluidized-bed chamber from below as heat carrier and to maintain the fluidized bed, characterized by adding to the fine ceramic slip liquefacients and as binding additives and pressing additives polyvinyl alcohol (PVA), polyvinyl acetate (PVAC) and polysaccharide/acrylic acid (PS/AC) in the amounts of 0.4 to 1.5 weight percent, related to the proportion of dry material of the slip, in the ratio of PVA : PVAC : PS/AC = (40 ± 20) : (50 ± 25) : (10 ± 10) % in such a way that the slip possesses a moisture of (38 ± 3) % and a density of (1600 ± 50) g/l, and by the incoming air temperature of the heat carrier for the fluidized-bed drying of fine ceramic pressing granulate being 180 to 250 °C and the outgoing air temperature being 40 to 100 °C.

## Revendications

1. Procédé pour préparer des granulés en fine matière céramique pour le pressage, que l'on obtient par séchage et granulation en couche tourbillonnante, la barbotine étant additionnée de fludifiant(s), d'adjuvant(s) de liaison et d'adjuvant(s) de pressage et de l'air chaud ou du gaz de fumée étant acheminée par le bas, à titre de fluide caloporteur et pour le maintien de l'état tourbillonnaire du lit fluidifié, procédé caractérisé en ce que la barbotine de fine matière céramique est additionnée d'un fluidifiant, et comme adjuvant de liaison et de pressage, de poly(alcool vinylique) (PVA), de poly(acétate de vinyle) (PVAC) et de polysaccharide/acide acrylique (PS/AC) en des quantités de 0,4 à 1,5 % en masse, par rapport à la fraction de matière sèche de la barbotine, selon le rapport PVA:PVAC: PS/AC = (40 ± 20): (50 ± 25) : (10 ± 10) % de façon que la barbotine présente une humidité de (38 ± 3) % et une masse volumique de (1600 ± 50 )g/l et que la température de l'air acheminé comme caloporteur pour le séchage avec granulation en couche tourbillonnaire du granulat de matière céramique fine pour pressage vale 180 à 250°C et que la température de l'air de sortie vale 40 à 100°C.
